# EUROPEAN PATENT SPECIFICATION

(11) **EP 1 527 912 B1**
(45) Date of publication and mention of the grant of the patent: **03.08.2011**
(21) Application number: 04388070.7
(22) Date of filing: 19.10.2004
(51) Int. Cl.: B60G 17/005, B60G 9/02

(54) **Rigid axle suspension for a vehicle, in particular utility vehicle**
Aufhängung einer Starrachse in einem Fahrzeug, insbesondere Nutzfahrzeug
Suspension à essieu rigide pour un véhicule, notamment véhicule utilitaire

(30) Priority: 28.10.2003 DK 200301591; 30.10.2003 DK 200301610
(43) Date of publication of application: 04.05.2005
(73) Proprietor: Hydrema Produktion A/S, 9530 Stovring (DK)
(72) Inventor: Iversen, Thorkil K., 9293 Kongerslev (DK)
(74) Representative: Larsen, Hans Ole

(56) References cited:
- GB-A- 2 274 629
- US-A- 5 813 697
- US-B1- 6 511 084

## Description

### The prior art

The invention relates to a suspension system, in particular for heavy vehicles, such as a dumptruck, which is provided with two or more pairs of wheels, where the front pair of wheels is mounted on a transverse driving rigid axle, where the axle is suspended partly from two rods, each of which extends from the upper side of the axle and to the chassis at each side so that the rods extend essentially in the direction of travel of the vehicle.

Vehicles of this type are normally not very comfortable for the driver, since there is only the damping of the loads on the vehicle which is provided by the springing in the driver's seat and in the tyres.

To this should be added that the vehicle itself is subjected to a corresponding load, which must therefore be absorbed directly by particularly the axle suspension and the tyres.

Where in some simple suspension systems the axle is suspended rigidly connected with a frame, the driving moment from the wheels will cause the chassis to move up and down during driving, which results in unsteady and uncomfortable driving.

To remedy these drawbacks and problems, it is known to suspend a rigid axle from four rods in an approximate parallelogram - the so-called four link suspension. This suspension, however, requires additional transverse rods, the so-called panhard rods which are capable of absorbing the lateral forces to which the axle is subjected when cornering, etc.

Such a suspension thus requires many rods and at least ten moveable link connections to the chassis. To this should be added increased wear of the tyres, since the geometry of the suspension will cause lateral movement on the axle at springing. Finally, the transverse rods take up space, which is a drawback since space must be available above the axle for both motor and gearbox.

US 5 524 921 discloses a springing wheel suspension comprising two parallel arms at the bottom and a V-shaped rod connection at the top in a plane above the wheel axle with two separate mounts.

This suspension has the drawback that lateral forces, which occur in particular when cornering, are transferred to the chassis via the mounts, which are present at a relative height above the surface of the ground. The moment hereby becomes relatively great, and it will impart a relatively great inclination to the vehicle. The two spaced connecting rods transfer the force to the chassis differently, which results in an irregular loading of the chassis and thereby unsteady driving.

US6511084 discloses a suspension system for a truck. The suspension system comprises two longitudinal control arms and a stabilizing device. The system can therefore absorb longitudinal impacts. However, no measures are taken to absorb transverse impacts. The truck has a steering system for steering the axle. This steering system comprises two control arms which is mounted in a triangular structure. The steering system is for steering the truck and not for absorbing impacts.

US5813697 discloses a suspension system with working cylinders for absorbing load forces. However, the suspension system does not have rods that extend in the longitudinal direction of the vehicle. It is therefore not possible to mount sensors which can measure the position of the rod relative to the chassis and thereby adjusting the vertical position of the wheels through the cylinders.

### The object of the invention

The object of the invention is to remedy these drawbacks, while improving the driveability, including the comfort for the driver, and this is achieved according to the invention by a suspension rod connection which extends from the centre on the lower side of the axle and to the chassis so that the rod connection extends essentially in parallel with the two overlying rods seen in a horizontal plane, where the lower suspension rod connection is configured as an isosceles triangle and mounted with the summit angle to the lower side of the axle and with the straight legs mounted to the chassis at points which are equidistantly spaced from each side of the central line of the vehicle, where the corners of the triangle is mounted in ball mounts and where each of the three sides of the triangle comprises a rigid leg.

This suspension ensures suitable springing, so that the movement of the vehicle will be damped considerably, as the axle can move in parallel up and down in the suspension, as the upper rods will be moved up and down in their suspension in the chassis, while the lower rod connection simultaneously allows the axle to tilt around its mount in the centre.

The forces during driving, which comprise longitudinal as well as transverse impacts from the wheels, will therefore be absorbed and be transferred to the chassis, where the longitudinal forces are transferred via the rods, and the transverse forces by the underlying rod connection via the point on the axle to which the rod connection is mounted, the so-called pendler point.

Cornering causes a lateral force via the wheels and thereby the axle, which gives a reaction in the mount of the rod connection which is transferred to the chassis via the two attachment points, bearings, of the rod connection. Since the spacing between the surface of the ground and the pendler point is small, there will be a correspondingly small moment and thereby small impacts in the working cylinders of the springing point itself which absorbs the moment in response to this. This results in an unprecedentedly low inclination of the vehicle when driving on bumpy ground.

This ensures in a surprisingly simple manner that the impacts from the tyres via the rods are transferred to the chassis in a controlled manner, which provides the greatest possible comfort for the driver.

When the lower rod connection is configured as a triangular member, the axial loads will be transferred in an effective manner to the chassis at two points in a suitable position relative to the centre line of the vehicle.

When, as stated in claim 2, a working cylinder, such as a hydraulic cylinder, is mounted in each of the sides of the axle, the vertical impacts from the weight, i.e. the vehicle with motor, etc., can be absorbed, just as they will serve as an effective damper in the suspension system.

When, as stated in claim 3, the height of the cylinders may be adjusted independently of each other, the horizontal position of the vehicle may be adjusted independently of the position of the tyres of the vehicle. By sensing the angular position of the upper rods it will be possible to adjust the vehicle currently for alignment by means of an electronic/hydraulic control. This alignment of the chassis also contributes to enhancing the driver's possibilities of operating the vehicle more easily.

### The drawing

An example of an embodiment of the invention will be described more fully below with reference to the drawing, in which
- fig. 1: is a bottom view of the suspension of the front pair of wheels,
- fig. 2: is a side view of the suspension, and
- fig. 3: is a rear view of the suspension partly in section.

### Description of an exemplary embodiment

The example comprises a rigid front axle on a construction machine, such as a dumptruck, which is a platform vehicle having a load capacity of around 20 t.

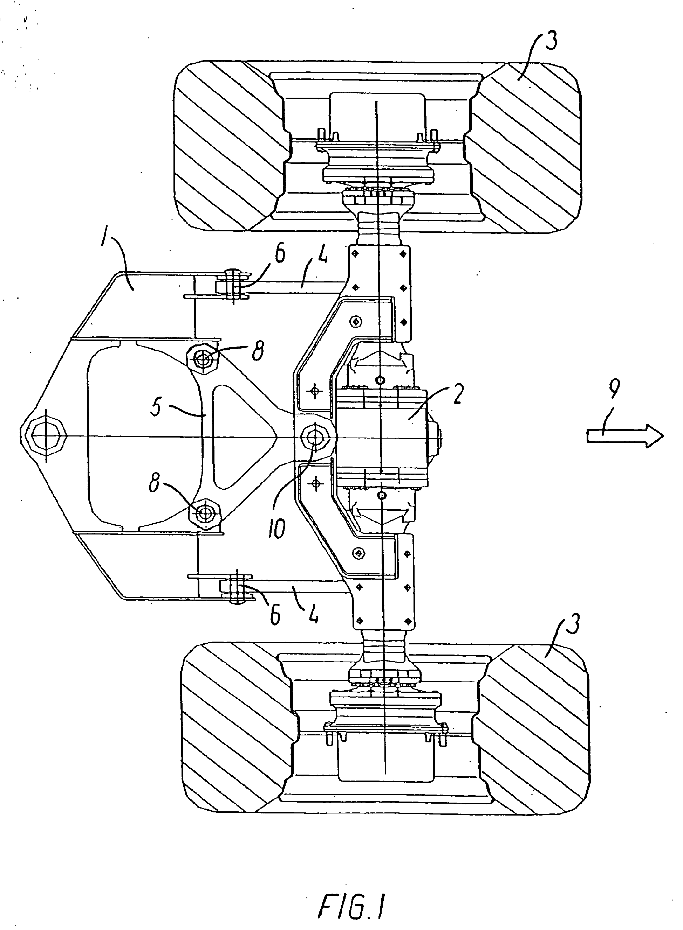

Forwardly, as shown in the drawing, the axle with the wheels is suspended from the chassis, said parts being comprised by figs. 1-3.

In fig. 1, the parts are shown from below, the direction of travel being indicated by an arrow 9.

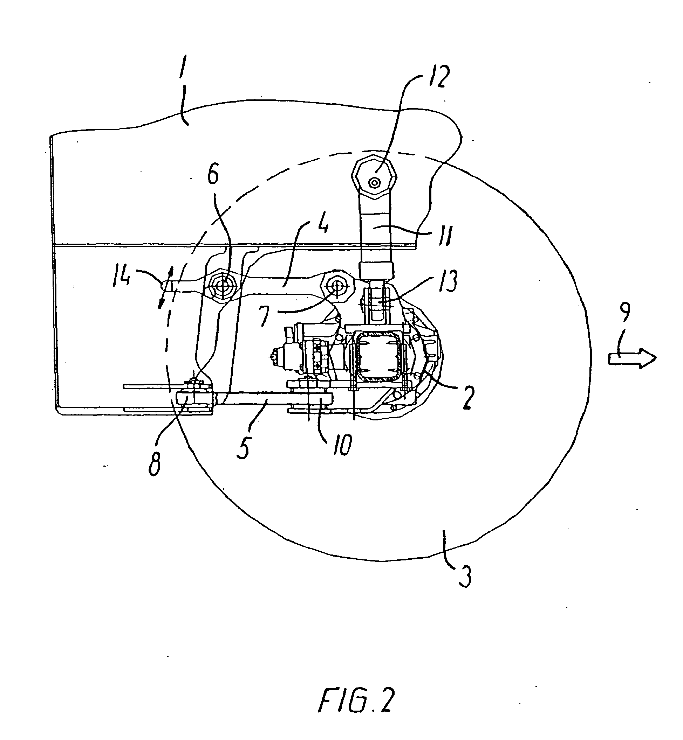

The suspension system comprises two upper rods 4, as shown most clearly in fig. 2, from which it appears that, in a bracket, they are mounted on the upper side of the axle mounted in a ball shell mount 7 with a horizontal axis of rotation and correspondingly in a mount 6 to the chassis frame 1.

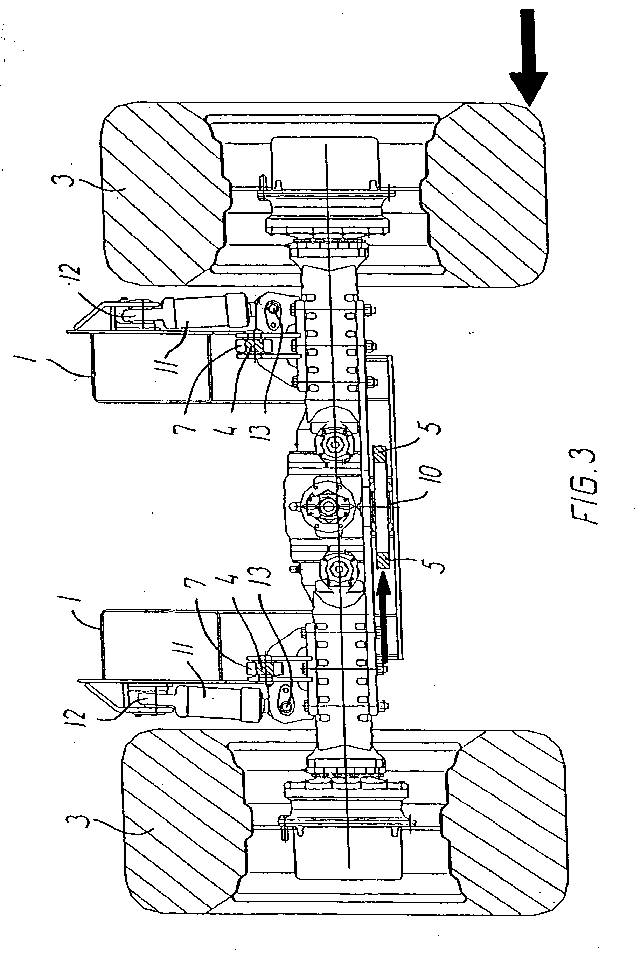

As will appear from figs. 1 and 3, the position of the rods is such that they extend in the longitudinal direction of the vehicle and are mutually parallel so that the axle 2 may perform a movement up and down, as the rods 4 may rotate in the suspensions 6, 7.

At the centre of the axle 2, a correspondingly rigid rod connection 5 is mounted on the lower side, as indicated in figs. 1 and 2 in a ball bearing mount 10 with vertical mobility, and correspondingly the rigid rod connection 5 is connected with the chassis frame 1 in two ball mounts 8 which are equidistantly spaced from the central line at the mount 10 to the axle 2.

To absorb the weight of the vehicle and to maintain the level of the chassis 1, two hydraulic cylinders 11 are additionally mounted, as shown in figs. 2 and 3.

These cylinders 11 are mounted at the sides near the wheels 3, as shown in fig. 3.

The mount of the cylinders comprises an upper bearing 12 to the chassis 1 and a lower bearing 13 to a bracket on the upper side of the axle 2.

To relieve the axle 2 and thereby the position of the wheels 3 on the ground, a sensor 14 for the position of the rods relative to the chassis is provided as indicated in fig. 2.

By means of generally known electronic control of the hydraulic supply to the two cylinders 11 it is possible to compensate for the differences in the horizontal level of the axle by suitable hydraulic supply and/or discharge of hydraulic liquid to change the extent of the working cylinder and thereby the position of the axle.

The mode of operation of the suspension and the height adjustment according to the invention will now be described.

The upper two rods 4 and the triangular underlying rod connection 5 as well as to a certain degree the two hydraulic cylinders 11 absorb the loads to which the axle 2 is subjected from the wheels 3 when the vehicle drives. The forces in the longitudinal direction of the vehicle are transferred from the axle 2 to the chassis 1 through the two upper rods 4 to mounts 6 on the chassis frame 1 and through the triangular connection 4 to the lower mounts 8 on the chassis frame 1.

The lateral forces on the axle, which occur particularly when cornering, are transferred from the axle 2 to the chassis frame 1 through the rigid triangular connection 5 above the mounts 8.

When these lateral forces are absorbed at the lowest central point 10 on the axle 2, it is ensured that the inclination during cornering is very small. Further, this low central absorption point 10 will mean that the axial movement of the axle 2 is minimum and thereby that the tyres 3 are subjected to less wear.

The vertical forces, which mainly originate from the weight of the machine, are transferred via the two hydraulic cylinders 11 to the chassis 1 in their mounts 12.

This suspension means that the axle, when it moves up and down, absorbs shocks in the vehicle, which is an advantage particularly when driving on bumpy ground, since it is preferably the axle 2 which moves up and down and not the entire vehicle.

The driving moment on the axle 2, which occurs when the vehicle drives, is absorbed in the upper rods 4 and the triangular connection 5 as a pure tension and compression. This avoids a reactive movement in the vehicle when the driving moment changes.

The suspension system described is very space-saving, in particular as transverse rod connections above the axle are avoided completely, which means that the system may be fitted more easily in a vehicle.

As mentioned, the height adjustment comprises a height sensor 14 which is used for adjusting the vertical position of the axle 2 in the height, so that the vehicle can always have the same height irrespective of the load and the state of the ground.

This height adjustment may also be made manually so that the vehicle may be raised and lowered within the vertical travel of the suspension system. This may be employed partly to achieve a maximum ground clearance and partly to reduce the height, e.g. during transport of the vehicle.

The system is sturdy and wear-resistant, comprises just a few rods and mounts, which makes it specially useful for heavy vehicles in particular, but it may be adapted to also smaller vehicles to the same advantage.

## Claims

1. A suspension system, in particular for heavy vehicles, such as a dumptruck, which is provided with two or more pairs of wheels, where the front pair of wheels (3) is mounted on a transverse driving rigid axle (2), where the axle (2) is suspended partly from two rods (4), each of which extends from the upper side of the axle (2) and to the chassis (1) at each side so that the rods (4) extend essentially in the direction of travel of the vehicle, **characterized in that** the suspension system comprises a suspension rod connection (5) which extends from the centre on the lower side of the axle (2) and to the chassis (1) so that the rod connection (5) extends essentially in parallel with the two overlying rods (4) seen in a horizontal plane, where the lower suspension rod connection (5) is configured as an isosceles triangle and mounted with the summit angle (10) to the lower side of the axle (2) and with the straight legs mounted to the chassis at points (8) which are equidistantly spaced from each side of the central line of the vehicle, where the corners of the triangle are mounted in ball mounts and where each of the three sides of the triangle comprises a rigid leg.

2. A suspension system according to claim 1, **characterized in that** a working cylinder (11) is mounted between the axle (2) and the chassis (1) at each side of the axle (2) preferably between the wheel (13) and the rod (4), said cylinders (11) extending essentially vertically.

3. A suspension system according to claim 2, **characterized in that** a height sensor (14) is placed on each of the rods (4) for sensing the horizontal position of the rods (4) relative to the chassis (1) such that the working cylinders (1), independently of each other, are capable of adjusting the vertical position of the wheels (3) relative to the chassis (1).

## Patentansprüche

1. Aufhängungssystem insbesondere für Lastfahrzeuge, wie etwa einen Muldenkipper, das mit wenigstens zwei Radpaaren versehen ist, wobei das vordere Radpaar (3) an einer querverlaufenden Antriebsstarrachse (2) angebracht ist und die Achse (2) teilweise an zwei Stangen (4) aufgehängt ist, von denen sich jede von der Oberseite der Achse (2) und zu der Karosserie (1) auf jeder Seite derart erstreckt, dass die Stangen (4) im wesentlichen in der Bewegungsrichtung des Fahrzeugs verlaufen,
**dadurch gekennzeichnet, dass** das Aufhängungssystem eine Aufhängungsstangenverbindung (5) enthält, die sich von dem Zentrum auf der Unterseite der Achse (2) und zu der Karosserie (1) derart erstreckt, dass die Stangenverbindung (5) im wesentlichen parallel zu den beiden darüber liegenden Stangen (4), in einer horizontalen Ebene gesehen, verläuft, wobei die untere Aufhängungsstangenverbindung (5) als gleichschenkeliges Dreieck aufgebaut ist und mit dem Scheitelwinkel (10) zur Unterseite der Achse (2) und mit den Schenkeln an der Karosserie an Punkten (8) angebracht ist, die von jeder Seite der Mittellinie des Fahrzeugs den gleichen Abstand haben, und die Ecken des Dreiecks in Kugelaufnahmen angebracht sind und jede der drei Seiten des Dreiecks einen starren Schenkel enthält.

2. Aufhängungssystem nach Anspruch 1, **dadurch gekennzeichnet, dass** ein Arbeitszylinder (11) zwischen der Achse (2) und der Karosserie (1) auf jeder Seite der Achse (2) vorzugsweise zwischen dem Rad (13) und der Stange (4) angebracht ist, wobei sich die Zylinder (11) im wesentlichen vertikal erstrecken.

3. Aufhängungssystem nach Anspruch 2, **dadurch gekennzeichnet, dass** ein Höhensensor (14) an jeder der Stangen (4) zum Erfassen der horizontalen Stellung der Stangen (4) im Bezug auf die Karosserie derart angebracht ist, dass die Arbeitszylinder (1) unabhängig voneinander in der Lage sind, die vertikale Stellung der Räder (3) im Bezug auf die Karosserie (1) einzustellen.

## Revendications

1. Système de suspension, en particulier pour les véhicules lourds, tel qu'un camion-benne, qui est doté de deux paires ou plus de roues, dans lequel la paire avant de roues (3) est montée sur un essieu rigide d'entraînement transversal (2), dans lequel l'essieu (2) est suspendu partiellement à deux tiges (4), dont chacune s'étend à partir du côté supérieur de l'essieu (2) et jusqu'au châssis (1) de chaque côté de sorte que les tiges (4) s'étendent sensiblement dans la direction de déplacement du véhicule, **caractérisé en ce que** le système de suspension comprend un raccordement de tige de suspension (5) qui s'étend à partir du centre sur le côté inférieur de l'essieu (2) et jusqu'au châssis (1) de sorte que le raccordement de tige (5) s'étend essentiellement parallèlement aux deux tiges en surplomb (4) observées dans un plan horizontal, dans lequel le raccordement de tige de suspension inférieur (5) est configuré comme un triangle isocèle et monté avec l'angle de sommet (10) sur le côté inférieur de l'essieu (2) et avec les pattes droites montées sur le châssis aux points (8) qui sont à équidistance de chaque côté de l'axe central du véhicule, dans lequel les coins du triangle sont montés dans des montants sphériques et dans lequel chacun des trois côtés du triangle comprend une patte rigide.

2. Système de suspension selon la revendication 1, **caractérisé en ce qu'**un cylindre de travail (11) est monté entre l'essieu (2) et le châssis (1) de chaque côté de l'essieu (2) de préférence entre la roue (13) et la tige (4), lesdits cylindres (11) s'étendant essentiellement verticalement.

3. Système de suspension selon la revendication 2, **caractérisé en ce qu'**un capteur de hauteur (14) est placé sur chacune des tiges (4) pour détecter la position horizontale des tiges (4) par rapport au châssis (1) de sorte que les cylindres de travail (1), indépendamment les uns des autres, peuvent ajuster la position verticale des roues (3) par rapport au châssis (1).
